(19) Europäisches Patentamt
European Patent Office
Office européen des brevets

(11) **EP 4 686 632 A1**

(12) **EUROPÄISCHE PATENTANMELDUNG**

(43) Veröffentlichungstag:
**04.02.2026 Patentblatt 2026/06**

(21) Anmeldenummer: **24192589.0**

(22) Anmeldetag: **02.08.2024**

(51) Internationale Patentklassifikation (IPC):
**B60W 50/00** *(2006.01)* **B60W 60/00** *(2020.01)*

(52) Gemeinsame Patentklassifikation (CPC):
**B60W 50/0097; B60W 60/0027; B60W 60/00274;**
B60W 2050/0024; B60W 2420/403;
B60W 2420/408; B60W 2554/4041;
B60W 2554/4042; B60W 2556/50

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **Robert Bosch GmbH**
**70442 Stuttgart (DE)**

(72) Erfinder:
• **Distelzweig, Aron**
**77963 Schwanau (DE)**
• **Look, Andreas**
**91077 Kleinsendelbach (DE)**
• **Kosman, Eitan**
**38830 Haifa (IL)**

Bemerkungen:
Geänderte Patentansprüche gemäss Regel 137(2) EPÜ.

(54) **VERFAHREN ZUM ERMITTELN POTENTIELLER TRAJEKTORIEN BEIM STEUERN EINER ROBOTERVORRICHTUNG**

(57) Die Erfindung betrifft ein Verfahren (200) zum Steuern einer Robotervorrichtung, aufweisend: Ermitteln einer Vielzahl von potentiellen Trajektorien eines Objekts in der Umgebung der Robotervorrichtung, indem mittels ein oder mehreren maschinellen Lernmodellen jeweils ein oder mehrere potentielle Trajektorien und für jede davon ein dieser zugeordneter Gewichtungsfaktor ermittelt werden; Ermitteln einer Vielzahl gewichteter Ähnlichkeitswerte, indem für jede der Vielzahl von potentiellen Trajektorien ein gewichteter Ähnlichkeitswert ermittelt wird, das Ermitteln aufweisend: Ermitteln eines Ähnlichkeitswertes, welcher eine Ähnlichkeit zwischen der potentiellen Trajektorie und einem Satz vorgeschlagener Trajektorien gemäß zumindest einer Ähnlichkeitsmetrik repräsentiert, und Ermitteln des gewichteten Ähnlichkeitswertes, indem der Ähnlichkeitswert gemäß dem der potentiellen Trajektorie zugeordneten Gewichtungsfaktor gewichtet wird; Adaptieren des Satzes vorgeschlagener Trajektorien, um einen adaptierten Satz vorgeschlagener Trajektorien zu ermitteln, welcher zu einer verringerten Summe der Vielzahl von gewichteten Ähnlichkeitswerten führt; Erzeugen von Steuerparametern zum Steuern der Robotervorrichtung unter Verwendung des adaptierten Satzes vorgeschlagener Trajektorien; und Steuern der Robotervorrichtung gemäß den Steuerparametern.

Fig. 2

EP 4 686 632 A1

**Beschreibung**

Stand der Technik

Beim zumindest teilweise automatisierten (z.B. autonomen) Fahren kann ein Planer eines Fahrzeugs anhand einer vordefinierten Anzahl an potentiellen zukünftigen Trajektorien eines anderen Verkehrsteilnehmers (z.B. eines anderen Fahrzeugs, eines Fußgängers, eines Fahrradfahrers, etc.) ein zukünftiges Verhalten des Fahrzeugs planen und das Fahrzeug kann entsprechend gesteuert werden. Hierbei kann die Qualität der Planung (z.B. in Bezug auf die Sicherheit) signifikant von der Auswahl der potentiellen zukünftigen Trajektorien abhängen.

Filos et al.: "Can Autonomous Vehicles Identify, Recover From, and Adapt to Distribution Shifts?", ar-Xiv:2006.14911v2, 2020 (im Folgenden als Referenz [1] bezeichnet) beschreibt ein Bewerten von potentiellen Trajektorien mittels eines Ensembles von Experten-Wahrscheinlichkeits-Modellen und eine Auswahl einer Teilmenge der potentiellen Trajektorien anhand der Bewertung.

Offenbarung der Erfindung

Die vorliegende Offenbarung bezieht sich auf ein Verfahren zum Steuern einer Robotervorrichtung, bei welchem potentielle Trajektorien (z.B. eines Verkehrsteilnehmers) nicht (wie beispielsweise in Referenz [1]) aus einem Satz potentieller Trajektorien (zufällig) ausgewählt werden, sondern direkt ermittelt werden, indem eine hierin offenbarte Metrik optimiert wird. Dadurch kann beispielsweise im Falle einer diversen Zukunft (also im Falle vieler voneinander verschiedener potentieller Trajektorien) eine Diversität der (ausgewählten) potentiellen Trajektorien sichergestellt werden und im Falle einer unimodalen (also nicht diversen) Zukunft kann eine unnötige Diversität der (ausgewählten) potentiellen Trajektorien verhindert werden. Die auf diese Weise ermittelten potentiellen Trajektorien können eine robuste und sichere Planung durch den Planer gewährleisten. Dadurch kann die Leistungsfähigkeit der Planung signifikant erhöht werden. Auch kann dadurch die Laufzeit der Planung verringert werden, da die Planung lediglich für die ausgewählten potentiellen Trajektorien und nicht alle potentiellen Trajektorien erfolgt.

Verschiedene Aspekte betreffen ein Verfahren zum Steuern einer Robotervorrichtung, das Verfahren aufweisend: Ermitteln einer Vielzahl von potentiellen Trajektorien eines Objekts (z.B. einer anderen Robotervorrichtung) in einer Umgebung der Robotervorrichtung, indem mittels ein oder mehreren maschinellen Lernmodellen (z.B. eines Ensembles von Bayesschen neuronalen Netzwerken) jeweils ein oder mehrere potentielle Trajektorien und für jede der ein oder mehreren potentiellen Trajektorien ein dieser zugeordneter Gewichtungsfaktor ermittelt werden; Ermitteln einer Vielzahl von gewichteten Ähnlichkeitswerten, indem für jede potentielle Trajektorie der Vielzahl von potentiellen Trajektorien ein jeweiliger gewichteter Ähnlichkeitswert ermittelt wird, wobei das Ermitteln eines gewichteten Ähnlichkeitswertes für eine potentielle Trajektorie aufweist: Ermitteln eines Ähnlichkeitswertes, welcher eine Ähnlichkeit zwischen der potentiellen Trajektorie und einem Satz vorgeschlagener Trajektorien gemäß einer oder mehr als einer Ähnlichkeitsmetrik (z.B. Abstandsmetrik) repräsentiert, und Ermitteln des gewichteten Ähnlichkeitswertes, indem der (ermittelte) Ähnlichkeitswert gemäß dem der potentiellen Trajektorie zugeordneten Gewichtungsfaktor gewichtet wird; Summieren der Vielzahl von gewichteten Ähnlichkeitswerten zu einem Fehlerwert; Adaptieren (z.B. Optimieren) des Satzes vorgeschlagener Trajektorien, um einen adaptierten (z.B. optimierten) Satz vorgeschlagener Trajektorien zu ermitteln, welcher zu einem verringerten (z.B. minimierten) Fehlerwert führt; Erzeugen von Steuerparametern zum Steuern der Robotervorrichtung unter Verwendung des adaptierten Satzes vorgeschlagener Trajektorien; und Steuern der Robotervorrichtung gemäß den Steuerparametern.

Im Folgenden werden verschiedene Ausführungsbeispiele angegeben.

Beispiel 1 ist das Verfahren zum Steuern einer Robotervorrichtung wie voranstehend beschrieben.

Beispiel 2 ist eingerichtet gemäß Beispiel 1, wobei jedes maschinelle Lernmodell der ein oder mehreren maschinellen Lernmodelle ein (z.B. Ensemble von) (z.B. Bayessches) neuronales Netzwerk aufweist; und/oder wobei der einer potentiellen Trajektorie der ein oder mehreren potentiellen Trajektorien zugeordnete Gewichtungsfaktor eine Unsicherheit der potentiellen Trajektorie repräsentiert.

Auf diese Weise können eine Unsicherheit in Bezug auf die jeweiligen Modellparameter und die jeweilige Architektur der ein oder mehreren maschinellen Lernmodelle berücksichtigt werden.

Beispiel 3 ist eingerichtet gemäß Beispiel 1 oder 2, wobei die Vielzahl von Trajektorien ermittelt wird, indem mittels genau einem maschinellen Lernmodell mehrere Trajektorien ermittelt werden.

Das hierin offenbarte Verfahren ermöglicht ein Ermitteln einer vordefinierten Anzahl potentieller Trajektorien auch in dem Fall, dass die Vielzahl von potentiellen Trajektorien mittels eines einzigen maschinellen Lernmodells vorhergesagt werden

Beispiel 4 ist eingerichtet gemäß einem der Beispiele 1 bis 3, wobei die eine oder mehr als eine Ähnlichkeitsmetrik einen minimalen durchschnittlichen Abstandsfehler (minADE) zwischen der potentiellen Trajektorie und dem Satz vorgeschlagener Trajektorien aufweist.

Beispiel 5 ist eingerichtet gemäß einem der Beispiele 1 bis 4, wobei die Robotervorrichtung ein zumindest teilweise automatisiertes Fahrzeug ist, wobei das Objekt ein anderer Verkehrsteilnehmer ist, und wobei die eine oder mehr als eine Ähnlichkeitsmetrik eine (Abseits-der-Straße) Metrik aufweist, die den Ähnlichkeitswert erhöht, wenn eine vorgeschlagene Trajektorie des Satzes vorgeschlagener Trajektorien abseits einer Straße liegt.

Wie hierin erläutert, kann eine Ähnlichkeitsmetrik verwendet werden oder es können auch mehrere Ähnlichkeitsmetriken kombiniert werden. Die Erfinder haben erkannt, dass der minimale durchschnittliche Abstandsfehler (minADE) als Ähnlichkeitsmetrik allgemein zu einer robusteren und sichereren Planung führt. Die (Abseits-der-Straße) Metrik kann im Falle des zumindest teilweise automatisierten Fahrens (beispielsweise in Verbindung mit der minADE Ähnlichkeitsmetrik) zu einer zusätzlichen Verbesserung führen, da Trajektorien anderer Fahrzeuge (also, wenn das Objekt ein anderes Fahrzeug ist), die abseits der Straße liegen, weniger Gewichtung gegeben wird.

Beispiel 6 ist eingerichtet gemäß einem der Beispiele 1 bis 5, wobei die vorgeschlagenen Trajektorien des (initialen) Satzes vorgeschlagener Trajektorien als Teilmenge (zufällig) aus der Vielzahl von potentiellen Trajektorien ausgewählt werden. Dadurch kann der Optimierungsprozess beschleunigt werden.

Beispiel 7 ist eine Steuervorrichtung, welche einen oder mehr als einen Prozessor aufweist, der eingerichtet ist, das Verfahren gemäß einem der Beispiele 1 bis 6 auszuführen.

Beispiel 8 ist eine Robotervorrichtung (z.B. ein zumindest teilweise automatisiertes Fahrzeug), welche die Steuervorrichtung gemäß Beispiel 7 aufweist.

Beispiel 9 ist ein Computerprogramm mit Befehlen, die, wenn sie durch einen Prozessor ausgeführt werden, bewirken, dass der Prozessor das Verfahren gemäß einem der Beispiele 1 bis 6 durchführt.

Beispiel 10 ist ein computerlesbares Medium, das Befehle speichert, die, wenn sie durch einen Prozessor ausgeführt werden, bewirken, dass der Prozessor das Verfahren gemäß einem der Beispiele 1 bis 6 durchführt.

In den Zeichnungen beziehen sich ähnliche Bezugszeichen im Allgemeinen auf dieselben Teile in den ganzen verschiedenen Ansichten. Die Zeichnungen sind nicht notwendigerweise maßstäblich, wobei die Betonung stattdessen im Allgemeinen auf die Darstellung der Prinzipien der Erfindung gelegt wird. In der folgenden Beschreibung werden verschiedene Aspekte mit Bezug auf die folgenden Zeichnungen beschrieben.

Figur 1 zeigt ein zumindest teilweise automatisiertes Fahrzeug gemäß verschiedenen Aspekten;

Figure 2 zeigt ein Ablaufdiagramm eines Verfahrens zum Steuern des zumindest teilweise automatisierten Fahrzeugs gemäß verschiedenen Aspekten;

Figur 3A und Figur 3B zeigen jeweils einen gemäß Verfahren 200 ermittelten Satz potentieller Trajektorien eines Verkehrsteilnehmers.

Die folgende ausführliche Beschreibung bezieht sich auf die begleitenden Zeichnungen, die zur Erläuterung spezielle Details und Aspekte dieser Offenbarung zeigen, in denen die Erfindung ausgeführt werden kann. Andere Aspekte können verwendet werden und strukturelle, logische und elektrische Änderungen können durchgeführt werden, ohne vom Schutzbereich der Erfindung abzuweichen. Die verschiedenen Aspekte dieser Offenbarung schließen sich nicht notwendigerweise gegenseitig aus, da einige Aspekte dieser Offenbarung mit einem oder mehreren anderen Aspekten dieser Offenbarung kombiniert werden können, um neue Aspekte zu bilden.

Im Folgenden werden verschiedene Beispiele genauer beschrieben.

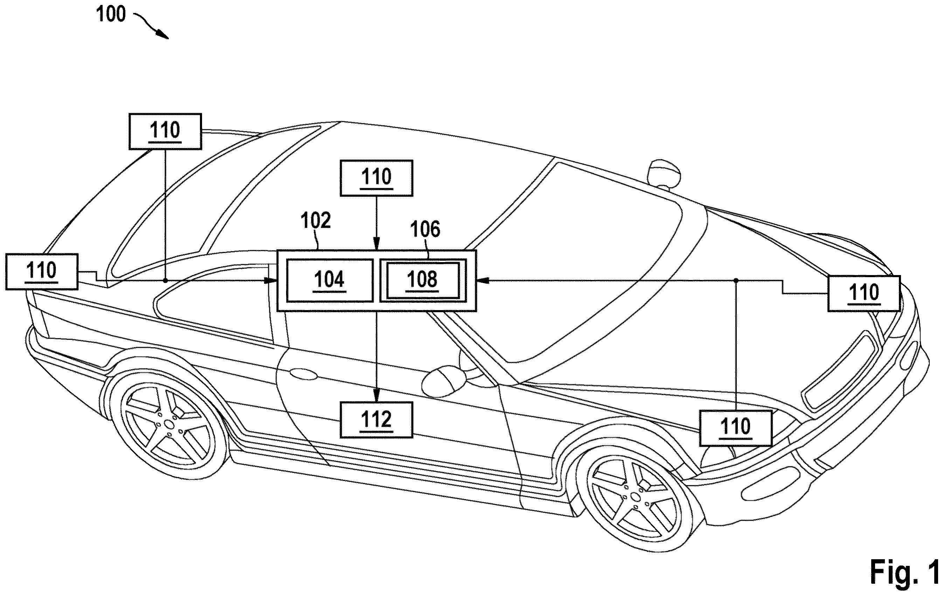

**FIG.1** zeigt ein zumindest teilweise automatisiertes Fahrzeug 100 gemäß verschiedenen Aspekten. Das in FIG.1 gezeigte und hierin zur Veranschaulichung beschriebene zumindest teilweise automatisierte Fahrzeug 100 ist eine beispielhafte computergesteuerte Vorrichtung. Obgleich hierin verschiedene Aspekte des computerimplementierten Verfahrens mit Bezug auf das Fahrzeug 100 beschrieben werden, wird verstanden, dass dies der Veranschaulichung dient und dass jede andere Art von computergesteuerter Vorrichtung das computerimplementierte Verfahren verwenden kann, bei dem Trajektorien von Objekten in der Umgebung der computergesteuerten Vorrichtung eine Rolle spielen, wie beispielsweise ein Industrieroboter (z.B. in der Form eines Roboterarms zum Bewegen, Montieren oder Bearbeiten eines Werkstücks, zum Entnehmen von Behältern usw.), ein Fertigungsroboter, ein Wartungsroboter, ein Haushaltsroboter (z.B. ein Reinigungsroboter, ein Rasenmähroboter, etc.) , ein Medizinroboter, etc.

Zur Steuerung des Fahrzeugs 100 kann das Fahrzeug 100 eine (Fahrzeug-) Steuervorrichtung 102 aufweisen, die eingerichtet ist, eine Interaktion des Fahrzeugs 100 mit dessen Umgebung gemäß einem Steuerungsprogramm zu realisieren. Der Begriff "Steuervorrichtung" kann als jede Art von logischer Implementierungseinheit verstanden werden, die beispielsweise eine Schaltung und/oder einen Prozessor beinhalten kann, der in der Lage ist, in einem Speichermedium gespeicherte Software, Firmware oder eine Kombination derselben auszuführen, und die Anweisungen, z.B. an ein Stellglied im vorliegenden Beispiel, erteilen kann. Die Steuervorrichtung kann beispielsweise durch Programmcode (z.B. Software) eingerichtet werden, den Betrieb eines Systems, im vorliegenden Beispiel eines Roboters, zu steuern.

In dem vorliegenden Beispiel kann die Steuervorrichtung 102 einen Computer 104 und einen Speicher 106, der

**EP 4 686 632 A1**

Code und Daten speichert, auf deren Grundlage der Computer 104 das Fahrzeug 100 steuert, aufweisen. Gemäß verschiedenen Aspekten kann die Steuervorrichtung 102 das Fahrzeug 100 basierend auf einem in dem Speicher 106 gespeicherten Steuerungsmodell 108 steuern.

Um eine Fahraufgabe des Fahrzeugs 100 steuern zu können, kann die Steuervorrichtung 102 Sensordaten verwenden, welche eine Umgebung des Fahrzeugs 100 repräsentieren. Hierzu kann das Fahrzeug 100 ein oder mehrere Sensoren 110 aufweisen, von denen jeder Sensor jeweilige Sensordaten bereitstellen kann, welche zumindest einen Teil der Umgebung des Fahrzeugs 100 repräsentieren. Ein Sensor der ein oder mehreren Sensoren 110 kann beispielsweise ein Bildgebungssensor und/oder ein Näherungssensor (engl.: proximity sensor) sein, wie zum Beispiel eine Kamera (z.B. eine Standardkamera, eine Digitalkamera, eine Infrarotkamera, eine Stereokamera, etc.), ein Radar-Sensor, ein LIDAR-Sensor, ein Ultraschallsensor, etc. sein. Ein Sensor der ein oder mehreren Sensoren 110 kann eingerichtet sein, ein Bild zu erfassen, welches zumindest einen Teil der Umgebung des Fahrzeuges 100 zeigt. Ein Bild kann ein RGB-Bild, ein RGB-D-Bild oder ein Tiefenbild (auch als D-Bild bezeichnet) sein. Ein hierin beschriebenes Tiefenbild kann jede Art von Bild sein, das Tiefeninformationen aufweist. Anschaulich kann ein Tiefenbild 3-dimensionale Informationen zu ein oder mehreren Objekten in der Umgebung des Fahrzeugs 100 aufweisen. Ein hierin beschriebenes Tiefenbild kann zum Beispiel eine Punktwolke aufweisen, die von einem LIDAR-Sensor und/oder einem Radar-Sensor bereitgestellt wird. Ein Tiefenbild kann zum Beispiel ein von einem LIDAR-Sensor bereitgestelltes Bild mit Tiefeninformationen sein. Es wird verstanden, dass das Fahrzeug 100 ferner andere Sensoren aufweisen kann, wie beispielsweise ein Globales-Navigations-Satelliten-System (GNSS, z. B. Globales-Positionierungs-System, GPS), einen Geschwindigkeitssensor, einen Beschleunigungssensor, einen Höhenmesssensor, ein Gyroskop, usw., und die Steuervorrichtung 102 kann auch Sensordaten, die von diesen anderen Sensoren bereitgestellt werden, zur Steuerung des Fahrzeugs 100 verwenden. Die Steuervorrichtung 102 kann eingerichtet sein, das Fahrzeug 100 in Reaktion auf eine Eingabe der Sensordaten in das Steuerungsmodell 108 auf der Grundlage einer Ausgabe des Steuerungsmodells 108 zu steuern.

Das Fahrzeug 100 kann eine Antriebsvorrichtung 112 zum Antreiben des Fahrzeugs 100 aufweisen. Die Steuervorrichtung 102 kann eingerichtet sein, unter Verwendung einer Ausgabe des Steuerungsmodells 108 einen Steuerparameter zum Steuern des Fahrzeugs 100 zu ermitteln. Die Steuervorrichtung 102 kann eingerichtet sein, einen Betrieb des Fahrzeugs 100 (z. B. durch Steuern der Antriebsvorrichtung 112 mittels eines Steuersignals) gemäß den Steuerparametern zu steuern.

Das zumindest teilweise automatisierte Fahrzeug 100 kann ein automatisiertes Fahrzeug oder ein autonomes Fahrzeug sein. Ein Autonomie-Level eines Fahrzeugs kann durch ein SAE (Society of Automotive Engineers) Level (z.B. wie in SAE J3016 definiert) ermittelt oder angegeben werden. Zum Beispiel kann das zumindest teilweise automatisierte Fahrzeug 100 ein teilautomatisiertes Fahrzeug (gemäß SAE-Level 2), ein hochautomatisiertes Fahrzeug (gemäß SAE-Level 3), ein vollautomatisiertes Fahrzeug (gemäß SAE-Level 4) oder ein autonomes Fahrzeug (gemäß SAE-Level 5) sein.

Ein zumindest teilweise automatisiertes Fahrzeug kann allgemein Fahraufgaben autonom übernehmen. Um die Sicherheit von Insassen und anderen Verkehrsteilnehmern (z. B. Radfahrern, Fußgängern, etc.) zu gewährleisten, ist es für solche Systeme, die autonom Fahraufgaben übernehmen, erforderlich, sehr sicherheitskritisch zu sein.

Um ein zukünftiges Verhalten des Fahrzeugs 100 zu planen, kann das Steuerungsmodell 108 einen Planer aufweisen. Hierfür können dem Planer potentielle (zukünftige) Trajektorien anderer Verkehrsteilnehmer zugeführt werden. Die potentiellen Trajektorien eines anderen Verkehrsteilnehmers können hierbei auf eine vordefinierte Anzahl beschränkt sein, um so die Größe des Suchbaums zu begrenzen. Die Robustheit und Sicherheit der Planung kann hierbei von den zugeführten potentiellen Trajektorien abhängig sein.

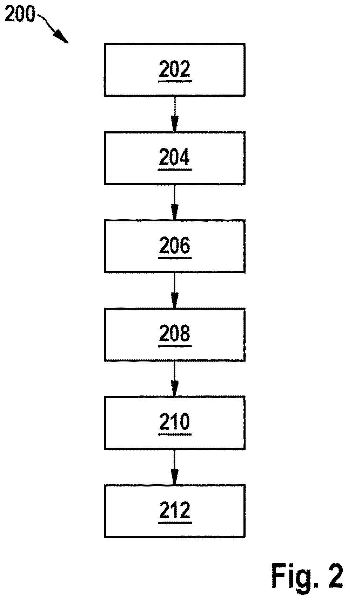

FIG.2 zeigt ein Ablaufdiagramm eines (computerimplementierten) Verfahrens 200 zum Steuern des zumindest teilweise automatisierten Fahrzeugs 100 gemäß verschiedenen Aspekten.

Bei dem Verfahren 200 wird die vordefinierte Anzahl potentieller Trajektorien nicht (wie beispielsweise in Referenz [1]) aus einem Satz potentieller Trajektorien (zufällig) ausgewählt, sondern direkt ermittelt, indem eine Metrik optimiert wird. Dadurch kann beispielsweise im Falle einer diversen Zukunft (also im Falle vieler voneinander verschiedener potentieller Trajektorien) eine Diversität der (ausgewählten) potentiellen Trajektorien sichergestellt werden und im Falle einer unimodalen (also nicht diversen) Zukunft kann eine unnötige Diversität der (ausgewählten) potentiellen Trajektorien verhindert werden. Die auf diese Weise ermittelten potentiellen Trajektorien können die robuste und sichere Planung durch den Planer gewährleisten.

Das Verfahren 200 kann (in 202) ein Ermitteln einer Vielzahl von potentiellen Trajektorien eines anderen Verkehrsteilnehmers in einer Umgebung des Fahrzeugs 100 aufweisen, indem mittels ein oder mehreren maschinellen Lernmodellen jeweils ein oder mehrere potentielle Trajektorien und für jede der ein oder mehreren potentiellen Trajektorien ein dieser zugeordneter Gewichtungsfaktor ermittelt werden.

So kann beispielsweise anhand der potentiellen Trajektorien des anderen Verkehrsteilnehmers bei der Planung sichergestellt werden, dass von dem anderen Verkehrsteilnehmer potentiell belegte Bereiche nicht befahren werden.

Das Verfahren 200 kann (in 204) ein Ermitteln einer Vielzahl von gewichteten Ähnlichkeitswerten aufweisen, indem für jede potentielle Trajektorie der Vielzahl von potentiellen Trajektorien ein jeweiliger gewichteter Ähnlichkeitswert ermittelt wird. Das Ermitteln eines gewichteten Ähnlichkeitswertes für eine potentielle Trajektorie kann aufweisen: Ermitteln eines Ähnlichkeitswertes, welcher eine Ähnlichkeit zwischen der potentiellen Trajektorie und einem Satz vorgeschlagener Trajektorien gemäß einer oder mehr als einer Ähnlichkeitsmetrik (z.B. Abstandsmetrik) repräsentiert, und Ermitteln des gewichteten Ähnlichkeitswertes, indem der (ermittelte) Ähnlichkeitswert gemäß dem der potentiellen Trajektorie zugeordneten Gewichtungsfaktor gewichtet wird.

Das Verfahren 200 kann (in 206) ein Summieren der Vielzahl von gewichteten Ähnlichkeitswerten zu einem Fehlerwert aufweisen.

Das Verfahren 200 kann (in 208) ein Adaptieren (z.B. Optimieren) des Satzes vorgeschlagener Trajektorien aufweisen, um einen adaptierten (z.B. optimierten) Satz vorgeschlagener Trajektorien zu ermitteln, welcher zu einem verringerten (z.B. minimierten) Fehlerwert führt.

Das Verfahren 200 kann (in 210) ein Erzeugen von Steuerparametern zum Steuern der Robotervorrichtung unter Verwendung des adaptierten Satzes vorgeschlagener Trajektorien aufweisen.

Das Verfahren 200 kann (in 212) ein Steuern der Robotervorrichtung gemäß den Steuerparametern.

Im Folgenden werden verschiedene Aspekte des Verfahrens 200 detaillierter beschrieben.

In 202 kann jedes maschinelle Lernmodell $f^n(x)$ der ein oder mehreren maschinellen Lernmodell $\{f^n(x)\}_{n=1}^N$ jeweils ein oder mehrere potentielle Trajektorien $y^n = \{y_k^n\}_{k=1}^K$ und für jede potentielle Trajektorie $y_k^n$ der ein oder mehreren potentiellen Trajektorien $\{y_k^n\}_{k=1}^K$ ein dieser zugeordneter Gewichtungsfaktor $w^n = w_k^n$ ermittelt werden (also $f^n(x) \rightarrow \{w_k^n, y_k^n\}_{k=1}^K$). Anschaulich können auf können auf diese Weise K*N potentielle Trajektorien (als die Vielzahl von potentiellen Trajektorien) mit jeweils zugeordnetem Gewichtungsfaktor $\{\{w_k^n\}_{k=1}^K, \{y_k^n\}_{k=1}^K\}_{n=1}^N$ ermittelt werden. Zum Ermitteln der ein oder mehreren potentiellen Trajektorien $y^n = \{y_k^n\}_{k=1}^K$ können einem maschinellen Lernmodell $f^n(x)$ beispielsweise die voranstehend beschriebenen Sensordaten zugeführt werden.

Eine hierin beschriebene potentielle Trajektorie ist eine Vorhersage einer zukünftigen Trajektorie.

Hierbei kann "N" jede Ganzzahl größer als oder gleich eins sein und "K" kann jede Ganzzahl größer als oder gleich eins sein, solange der Faktor K*N größer als eins ist. Anschaulich kann im Falle von N=1 ein einziges maschinelles Lernmodell $f^N(x)$ mehrere potentiellen Trajektorien $\{y_k^N\}_{k=1}^K$ (mit K>1) vorhersagen und im Falle von K=1 können mehrere maschinelle Lernmodelle $\{f^n(x)\}_{n=1}^N$ (mit N>1) jeweils genau eine potentielle Trajektorie K vorhersagen.

Ein maschinelles Lernmodell kann beispielsweise ein (z.B. Bayessches) neuronales Netzwerk sein und der einer mittels dieses (Bayesschen) neuronalen Netzwerks ermittelten potentiellen Trajektorie zugeordnete Gewichtungsfaktor kann eine Unsicherheit der potentiellen Trajektorie repräsentieren.

Die Erfinder haben erkannt, dass diese Vielzahl von potentiellen Trajektorien mit dem jeweils zugehörigen Gewichtungsfaktor $\{\{w_k^n\}_{k=1}^K, \{y_k^n\}_{k=1}^K\}_{n=1}^N$ als gewichtete Dirac Delta Funktion (auch als gewichtete Dirac-Verteilung bezeichnet) betrachtet werden kann:

$$q(y) = \sum_k \sum_n w_k^n \delta(y_k^n - y).$$

Diese Betrachtung ermöglicht die hierin offenbarte Metrik zum direkten Ermitteln des (optimierten) Satzes potentieller Trajektorien $\hat{y} = \{\hat{y}_s\}_{s=1}^S$ (mit $1 \leq S < K*N$). So wird diese Metrik gemäß verschiedenen Aspekten optimiert, so dass der Satz potentieller Trajektorien $\{\hat{y}_s\}_{s=1}^S$ direkt ermittelt werden kann und nicht aus der Vielzahl von Trajektorien $\{\{y_k^n\}_{k=1}^K\}_{n=1}^N$ ausgewählt werden. Wenn der Satz potentieller Trajektorien direkt aus der Vielzahl von Trajektorien ausgewählt werden würde, so könnten mögliche Szenarien übersehen werden, was sicherheitsgefährdend sein kann (z.B. zu Unfällen führen kann).

In 204 kann dann für jede potentielle Trajektorie $y_k^n$ der ein oder mehreren potentiellen Trajektorien $\{y_k^n\}_{k=1}^K$ der jeweilige gewichtete Ähnlichkeitswert ermittelt werden.

Hierzu kann Ähnlichkeitswert ermittelt werden, welcher eine Ähnlichkeit zwischen der potentiellen Trajektorie $y_k^n$ und dem Satz vorgeschlagener Trajektorien $\hat{y} = \{\hat{y}_s\}_{s=1}^S$ gemäß einer oder mehr als einer Ähnlichkeitsmetrik (z.B. Abstandsmetrik) repräsentiert. Zur Veranschaulichung kann diese eine oder mehr als ein Ähnlichkeitsmetrik der minimale durchschnittliche Abstandsfehler (minADE) sein. In diesem Fall kann der Ähnlichkeitswert resultieren aus:

$$\mathrm{minADE}_S(y_k^n, \hat{y}) = \min_s \{||y_k^n - \tilde{y}_s||_2\}_{s=1}^S.$$

Da die Ähnlichkeit zwischen jeder potentiellen Trajektorie $y_k^n$ und dem Satz vorgeschlagener Trajektorien $\hat{y} = \{\hat{y}_s\}_{s=1}^S$ berücksichtigt wird, kann im Falle eines diversen Szenarios (also im Falle vieler voneinander verschiedener potentieller Trajektorien, beispielsweise in voneinander verschiedene Richtungen) eine Diversität der (ausgewählten) potentiellen Trajektorien sichergestellt werden. Weist die Vielzahl von Trajektorien $\{\{y_k^n\}_{k=1}^K\}_{n=1}^N$ an einer Kreuzung beispielsweise Trajektorien nach links, Trajektorien nach rechts und Trajektorien geradeaus auf, so kann mittels des Verfahrens 200 sichergestellt werden, dass der Satz vorgeschlagener Trajektorien $\hat{y} = \{\hat{y}_s\}_{s=1}^S$ ebenfalls zumindest eine Trajektorie nach links, zumindest eine Trajektorie nach rechts, und zumindest eine Trajektorie geradeaus aufweist.

Der minimale durchschnittliche Abstandsfehler minADE gibt den minimalen Abweichungsfehler zwischen der potentiellen Trajektorie $y_k^n$ und dem (zu optimierenden) Satz potentieller Trajektorien $\tilde{y} = \{\tilde{y}_s\}_{s=1}^S$ aus. Es wird verstanden, dass der minADE der Veranschaulichung dient und dass zusätzlich oder alternativ jede andere (optimierbare) Ähnlichkeitsmetrik verwendet werden kann. Beispielsweise kann zusätzlich oder alternativ die (Abseits-der-Straße) Metrik verwendet werden, gemäß welcher der Ähnlichkeitswert erhöht wird, wenn sich die potentielle Trajektorie $y_k^n$ des anderen Verkehrsteilnehmers abseits der Straße befindet.

In diesem Beispiel kann die Ähnlichkeit zwischen der potentiellen Trajektorie $y_k^n$ und dem Satz vorgeschlagener Trajektorien $\hat{y} = \{\hat{y}_s\}_{s=1}^S$ umso größer sein, je kleiner der Ähnlichkeitswert ist. Es wird verstanden, dass dies beispielhaft ist und für verschiedene Ähnlichkeitsmetriken (z.B. Abstandsmetriken) üblich sein kann, aber dass dies auch umgekehrt sein kann.

Der gewichtete Ähnlichkeitswert kann dann ermittelt werden, indem der (ermittelte) Ähnlichkeitswert gemäß dem der potentiellen Trajektorie $y_k^n$ zugeordneten Gewichtungsfaktor wk gewichtet wird. Der gewichtete Ähnlichkeitswert kann also resultieren aus:

$$w_k^n \mathrm{minADE}_S(y_k^n, \hat{y}).$$

In 206 können die K*N gewichteten Ähnlichkeitswerte dann zu einem Fehlerwert summiert werden. Der Fehlerwert kann also resultieren aus:

$$\sum_k \sum_n w_k^n \mathrm{minADE}_S(y_k^n, \hat{y}).$$

In 208 kann dann der Satz vorgeschlagener Trajektorien ŷ adaptiert (z.B. optimiert) werden, um den Fehlerwert zu verringern (z.B. zu minimieren). Anschaulich kann das Optimieren erfolgen gemäß:

$$\hat{y} = \{\hat{y}_s\}_{s=1}^{S} = \underset{\tilde{y}=\{\tilde{y}_s\}_{s=1}^{S}}{\arg\min} \mathbb{E}_{y \sim q(y)}\left[\min_{s}\{||y - \tilde{y}_s||_2\}_{s=1}^{S}\right] = \underset{\{\tilde{y}_s\}_{s=1}^{S}}{\arg\min} \mathbb{E}_{y \sim q(y)}[\min ADE_S(y, \tilde{y})],$$

wobei $\tilde{y} = \{\tilde{y}_s\}_{s=1}^{S}$ der zu optimierende Satz potentieller Trajektorien ist und $\hat{y} = \{\hat{y}_s\}_{s=1}^{S}$ der optimierte Satz potentieller Trajektorien ist. Dieses Optimieren des Satzes potentieller Trajektorien kann als annähernde empirische Risikominimierung unter der Verteilung aus der Vielzahl von Trajektorien $\{\{y_k^n\}_{k=1}^{K}\}_{n=1}^{N}$ betrachtet werden.

Das Ermitteln des Satzes potentieller Trajektorien y gemäß Schritten 202 bis 206 des Verfahrens 200 ist beispielhaft für minADE als Ähnlichkeitsmetrik in Algorithmus 1 dargestellt. Die Trajektorien des initialen Satzes potentieller Trajektorien y können zufällig ausgewählt werden, können zufällig aus der Vielzahl von Trajektorien $\{\{y_k^n\}_{k=1}^{K}\}_{n=1}^{N}$ ausgewählt werden, und/oder können mittels eines maschinellen Lernmodells ausgewählt werden.

-------------------------------------------------------------------------------------

---

Algorithmus 1: Ermitteln des Satzes potentieller Trajektorien $\hat{y}$

-------------------------------------------------------------------------------------

---

Eingabe: Vielzahl von potentiellen Trajektorien mit dem jeweils zugehörigen Gewichtungsfaktor $\{\{w_k^n\}_{k=1}^{K}, \{y_k^n\}_{k=1}^{K}\}_{n=1}^{N}$
Anzahl $S$ an potentiellen Trajektorien

Ausgabe: Satz potentieller Trajektorien $\hat{y} = \{\hat{y}_s\}_{s=1}^{S}$

Initialisiere den (initialen) Satz potentieller Trajektorien $\hat{y}$.

Optimiere $\hat{y}$:

    **Solange** nicht konvergiert **Tue**

        Fehlerwert = $\sum_k \sum_n w_k^n \min ADE_S(y_k^n, \hat{y})$.

        Adaptieren des Satzes vorgeschlagener Trajektorien zur Verringerung des
Fehlerwertes (z.B. mittels Rückwärtspropagation).

        Nächster Optimierungsschritt.

    **Rückgabe** $\hat{y}$

-------------------------------------------------------------------------------------

--

.

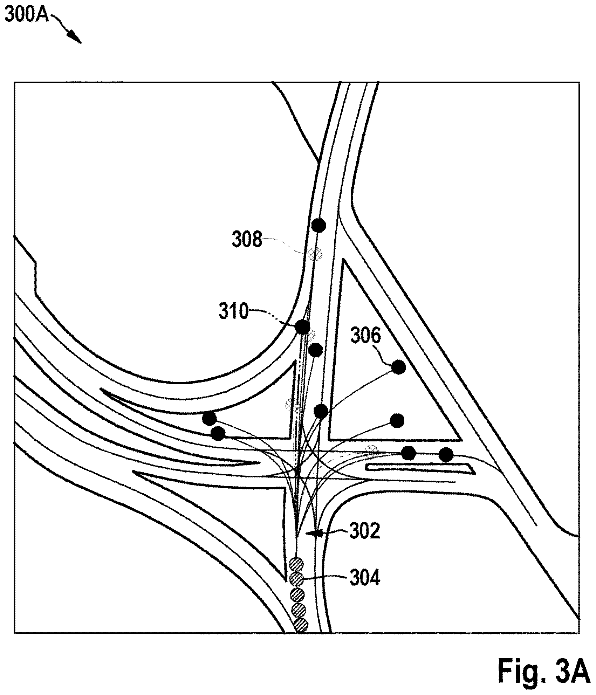

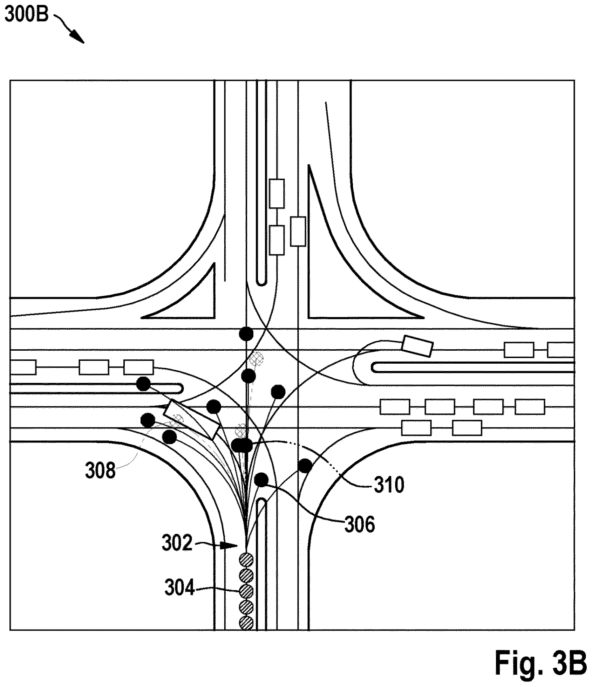

**FIG.3A** zeigt ein erstes Verkehrsszenario 300A und **FIG.3B** zeigt ein zweites Verkehrsszenario 300B, bei welchem für einen Verkehrsteilnehmer 302, der eine vergangene Trajektorie 304 (als Parallelschraffur dargestellt) zurückgelegt hat, gemäß Verfahren 200 die Vielzahl von potentiellen (zukünftigen) Trajektorien 306 (als durchgezogene Linien mit ausgefülltem Endpunkt dargestellt) mit dem jeweils zugehörigen Gewichtungsfaktor $\{\{w_k^n\}_{k=1}^{K}, \{y_k^n\}_{k=1}^{K}\}_{n=1}^{N}$ ermittelt wird und anhand dieser der (optimierte) Satz potentieller (zukünftiger) Trajektorien 308, $\hat{y}$, (als gestrichelte Linien mit einem Endpunkt in Kreuzschraffur dargestellt) für S=5 ermittelt wird. Die Strich-Punkt-Linie 310 stellt die Grundwahrheitstrajektorie dar, also die Trajektorie, welche der Verkehrsteilnehmer 302 in der Zukunft zurückgelegt hat. Dass es sich bei den Trajektorien des (optimierten) Satzes potentieller Trajektorien 308, $\hat{y}$, nicht um eine Auswahl aus der Vielzahl von potentiellen Trajektorien 306 handelt, ist beispielsweise anschaulich in FIG.3B zu sehen, da die mit 308 gekennzeichnete potentielle Trajektorie mit keiner der Trajektorie der Vielzahl von potentiellen Trajektorien 306 übereinstimmt.

Obgleich in den obigen Ausführungen der Ansatz von FIG.2 zur Steuerung des Fahrzeugs 100 angewendet wird, kann dieser allgemein zum Ermitteln eines Steuersignals zur Steuerung eines beliebigen technischen Systems angewendet werden in einem Szenario, in dem eine begrenzte Menge an potentiellen (zukünftigen) Trajektorien eine Rolle spielt, wie z.B. eine computergesteuerte Maschine, wie ein Roboter, ein Fahrzeug, ein Haushaltsgerät, ein Elektrowerkzeug, eine Fertigungsmaschine, ein persönlicher Assistent oder ein Zugangskontrollsystem. Gemäß verschiedenen Aspekten kann ein Verfahren zur Vorhersage eines Verhaltens eines Verkehrsteilnehmers die Schritte 202 bis 208 des Verfahrens 200 aufweisen.

**Patentansprüche**

1. Verfahren (200) zum Steuern einer Robotervorrichtung, das Verfahren (200) aufweisend:

   • Ermitteln (202) einer Vielzahl von potentiellen Trajektorien (306) eines Objekts (302) in einer Umgebung der Robotervorrichtung (100), indem mittels ein oder mehreren maschinellen Lernmodellen jeweils ein oder mehrere potentielle Trajektorien und für jede der ein oder mehreren potentiellen Trajektorien ein dieser zugeordneter Gewichtungsfaktor ermittelt werden;
   • Ermitteln (204) einer Vielzahl von gewichteten Ähnlichkeitswerten, indem für jede potentielle Trajektorie der Vielzahl von potentiellen Trajektorien (306) ein jeweiliger gewichteter Ähnlichkeitswert ermittelt wird, wobei das Ermitteln eines gewichteten Ähnlichkeitswertes für eine potentielle Trajektorie aufweist:

      ◦ Ermitteln eines Ähnlichkeitswertes, welcher eine Ähnlichkeit zwischen der potentiellen Trajektorie und einem Satz vorgeschlagener Trajektorien gemäß einer oder mehr als einer Ähnlichkeitsmetrik repräsentiert, und
      ◦ Ermitteln des gewichteten Ähnlichkeitswertes, indem der Ähnlichkeitswert gemäß dem der potentiellen Trajektorie zugeordneten Gewichtungsfaktor gewichtet wird;

   • Summieren (206) der Vielzahl von gewichteten Ähnlichkeitswerten zu einem Fehlerwert;
   • Adaptieren (208) des Satzes vorgeschlagener Trajektorien, um einen adaptierten Satz vorgeschlagener Trajektorien (308) zu ermitteln, welcher zu einem verringerten Fehlerwert führt;
   • Erzeugen (210) von Steuerparametern zum Steuern der Robotervorrichtung unter Verwendung des adaptierten Satzes vorgeschlagener Trajektorien (308); und
   • Steuern (212) der Robotervorrichtung (100) gemäß den Steuerparametern.

2. Verfahren (200) gemäß Anspruch 1,

   wobei jedes maschinelle Lernmodell der ein oder mehreren maschinellen Lernmodelle ein Bayessches neuronales Netzwerk aufweist; und/oder
   wobei der einer potentiellen Trajektorie der ein oder mehreren potentiellen Trajektorien zugeordnete Gewichtungsfaktor eine Unsicherheit der potentiellen Trajektorie repräsentiert.

3. Verfahren (200) gemäß Anspruch 1 oder 2,
   wobei die Vielzahl von Trajektorien (306) ermittelt wird, indem mittels genau einem maschinellen Lernmodell mehrere Trajektorien ermittelt werden.

4. Verfahren (200) gemäß einem der Ansprüche 1 bis 3,
   wobei die eine oder mehr als eine Ähnlichkeitsmetrik einen minimalen durchschnittlichen Abstandsfehler zwischen der potentiellen Trajektorie und dem Satz vorgeschlagener Trajektorien aufweist.

5. Verfahren (200) gemäß einem der Ansprüche 1 bis 4,

   wobei die Robotervorrichtung (100) ein zumindest teilweise automatisiertes Fahrzeug ist, wobei das Objekt (302) ein anderer Verkehrsteilnehmer ist, und
   wobei die eine oder mehr als eine Ähnlichkeitsmetrik eine Metrik aufweist, die den Ähnlichkeitswert erhöht, wenn eine vorgeschlagene Trajektorie des Satzes vorgeschlagener Trajektorien abseits einer Straße liegt.

6. Verfahren (200) gemäß einem der Ansprüche 1 bis 5,
wobei die vorgeschlagenen Trajektorien des Satzes vorgeschlagener Trajektorien als Teilmenge aus der Vielzahl von potentiellen Trajektorien ausgewählt werden.

7. Steuervorrichtung (102), die eingerichtet ist, das Verfahren (200) gemäß einem der Ansprüche 1 bis 6 auszuführen.

8. Robotervorrichtung (100), welche die Steuervorrichtung (102) gemäß Anspruch 7 aufweist.

9. Computerprogramm mit Befehlen, die, wenn sie durch einen Prozessor ausgeführt werden, bewirken, dass der Prozessor das Verfahren (200) gemäß einem der Ansprüche 1 bis 6 durchführt.

10. Computerlesbares Medium, das Befehle speichert, die, wenn sie durch einen Prozessor ausgeführt werden, bewirken, dass der Prozessor das Verfahren (200) gemäß einem der Ansprüche 1 bis 6 durchführt.

**Geänderte Patentansprüche gemäss Regel 137(2) EPÜ.**

1. Verfahren (200) zum Steuern eines zumindest teilweisen automatisierten Fahrzeugs (100), das Verfahren (200) aufweisend:

   • Ermitteln (202) einer Vielzahl von potentiellen Trajektorien (306) eines anderen Verkehrsteilnehmers (302) in einer Umgebung des Fahrzeugs (100), indem mittels ein oder mehreren maschinellen Lernmodellen jeweils ein oder mehrere potentielle Trajektorien und für jede der ein oder mehreren potentiellen Trajektorien ein dieser zugeordneter Gewichtungsfaktor ermittelt werden;
   • Ermitteln (204) einer Vielzahl von gewichteten Ähnlichkeitswerten, indem für jede potentielle Trajektorie der Vielzahl von potentiellen Trajektorien (306) ein jeweiliger gewichteter Ähnlichkeitswert ermittelt wird, wobei das Ermitteln eines gewichteten Ähnlichkeitswertes für eine potentielle Trajektorie aufweist:

   ◦ Ermitteln eines Ähnlichkeitswertes, welcher eine Ähnlichkeit zwischen der potentiellen Trajektorie und einem Satz vorgeschlagener Trajektorien gemäß einer oder mehr als einer Ähnlichkeitsmetrik repräsentiert, und
   ◦ Ermitteln des gewichteten Ähnlichkeitswertes, indem der Ähnlichkeitswert gemäß dem der potentiellen Trajektorie zugeordneten Gewichtungsfaktor gewichtet wird;

   • Summieren (206) der Vielzahl von gewichteten Ähnlichkeitswerten zu einem Fehlerwert;
   • Adaptieren (208) des Satzes vorgeschlagener Trajektorien, um einen adaptierten Satz vorgeschlagener Trajektorien (308) zu ermitteln, welcher zu einem verringerten Fehlerwert führt;
   • Erzeugen (210) von Steuerparametern zum Steuern des Fahrzeugs (100) unter Verwendung des adaptierten Satzes vorgeschlagener Trajektorien (308); und
   • Steuern (212) des Fahrzeugs (100) gemäß den Steuerparametern.

2. Verfahren (200) gemäß Anspruch 1,
wobei jedes maschinelle Lernmodell der ein oder mehreren maschinellen Lernmodelle ein Bayessches neuronales Netzwerk aufweist; und/oder wobei der einer potentiellen Trajektorie der ein oder mehreren potentiellen Trajektorien zugeordnete Gewichtungsfaktor eine Unsicherheit der potentiellen Trajektorie repräsentiert.

3. Verfahren (200) gemäß Anspruch 1 oder 2,
wobei die Vielzahl von Trajektorien (306) ermittelt wird, indem mittels genau einem maschinellen Lernmodell mehrere Trajektorien ermittelt werden.

4. Verfahren (200) gemäß einem der Ansprüche 1 bis 3,
wobei die eine oder mehr als eine Ähnlichkeitsmetrik einen minimalen durchschnittlichen Abstandsfehler zwischen der potentiellen Trajektorie und dem Satz vorgeschlagener Trajektorien aufweist.

5. Verfahren (200) gemäß einem der Ansprüche 1 bis 4,
wobei die eine oder mehr als eine Ähnlichkeitsmetrik eine Metrik aufweist, die den Ähnlichkeitswert erhöht, wenn eine vorgeschlagene Trajektorie des Satzes vorgeschlagener Trajektorien abseits einer Straße liegt.

6. Verfahren (200) gemäß einem der Ansprüche 1 bis 5,

wobei die vorgeschlagenen Trajektorien des Satzes vorgeschlagener Trajektorien als Teilmenge aus der Vielzahl von potentiellen Trajektorien ausgewählt werden.

7. Steuervorrichtung (102), die eingerichtet ist, das Verfahren (200) gemäß einem der Ansprüche 1 bis 6 auszuführen.

8. Zumindest teilweise automatisiertes Fahrzeug (100), welches die Steuervorrichtung (102) gemäß Anspruch 7 aufweist.

9. Computerprogramm mit Befehlen, die, wenn sie durch einen Prozessor ausgeführt werden, bewirken, dass der Prozessor das Verfahren (200) gemäß einem der Ansprüche 1 bis 6 durchführt.

10. Computerlesbares Medium, das Befehle speichert, die, wenn sie durch einen Prozessor ausgeführt werden, bewirken, dass der Prozessor das Verfahren (200) gemäß einem der Ansprüche 1 bis 6 durchführt.

EP 4 686 632 A1

100

110

110

110

102

110

104

106

108

110

112

Fig. 1

200

202

204

206

208

210

212

# Fig. 2

300A

308

310

306

302

304

**Fig. 3A**

300B

Fig. 3B

Europäisches
Patentamt
European
Patent Office
Office européen
des brevets

## EUROPÄISCHER RECHERCHENBERICHT

**Nummer der Anmeldung**

EP 24 19 2589

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | US 11 433 922 B1 (VAN HEUKELOM MATTHEW [US] ET AL) 6. September 2022 (2022-09-06) * Spalte 22, Zeile 1 - Spalte 23, Zeile 8; Abbildungen 4,6 * ----- | 1-10 | INV. B60W50/00 B60W60/00 |
| A | US 2022/171065 A1 (LI PEI [CN] ET AL) 2. Juni 2022 (2022-06-02) * Absätze [0066] - [0073]; Abbildungen 1,5 * ----- | 1-10 | |
| A | WO 2024/145144 A1 (AURORA OPERATIONS INC [US]) 4. Juli 2024 (2024-07-04) * Absätze [0173] - [0190]; Abbildungen 8,9 * ----- | 1-10 | |

|  |  |
|---|---|
|  | **RECHERCHIERTE SACHGEBIETE (IPC)** |
|  | B60W |

Der vorliegende Recherchenbericht wurde für alle Patentansprüche erstellt

| Recherchenort | Abschlußdatum der Recherche | Prüfer |
|---|---|---|
| München | 17. Januar 2025 | Wurzer, Oliver |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**                     EP 24 19 2589

17-01-2025

| Im Recherchenbericht angeführtes Patentdokument | Datum der Veröffentlichung | Mitglied(er) der Patentfamilie | Datum der Veröffentlichung |
|---|---|---|---|
| US 11433922 B1 | 06-09-2022 | KEINE | |
| US 2022171065 A1 | 02-06-2022 | CN 114450703 A | 06-05-2022 |
| | | US 2022171065 A1 | 02-06-2022 |
| | | WO 2021062595 A1 | 08-04-2021 |
| WO 2024145144 A1 | 04-07-2024 | KEINE | |

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **FILOS et al.** Can Autonomous Vehicles Identify, Recover From, and Adapt to Distribution Shifts. *arXiv:2006.14911v2*, 2020